(19) Europäisches Patentamt / European Patent Office / Office européen des brevets

(11) **EP 1 803 336 B1**

(12) **EUROPÄISCHE PATENTSCHRIFT**

(45) Veröffentlichungstag und Bekanntmachung des Hinweises auf die Patenterteilung:
**06.08.2014  Patentblatt 2014/32**

(21) Anmeldenummer: **05797029.5**

(22) Anmeldetag: **05.10.2005**

(51) Int Cl.:
*H05B 41/28* (2006.01)    *H05B 41/282* (2006.01)

(86) Internationale Anmeldenummer:
**PCT/EP2005/010728**

(87) Internationale Veröffentlichungsnummer:
**WO 2006/042640 (27.04.2006 Gazette 2006/17)**

(54) **MODULATION EINES PFC BEI DC-BETRIEB**

MODULATION OF A PFC DURING DC OPERATION

MODULATION D'UNE CORRECTION DU FACTEUR DE PUISSANCE EN CAS DE FONCTIONNEMENT EN COURANT CONTINU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.10.2004  DE 102004051162**

(43) Veröffentlichungstag der Anmeldung:
**04.07.2007  Patentblatt 2007/27**

(73) Patentinhaber: **Tridonic GmbH & Co KG**
**6851 Dornbirn (AT)**

(72) Erfinder:
• **LAMPERT, Peter**
**6804 Feldkirch (AT)**

• **KLIEN, Dietmar**
**6841 Mäder (AT)**

(74) Vertreter: **Rupp, Christian et al**
**Mitscherlich PartmbB**
**Patent- und Rechtsanwälte**
**Sonnenstraße 33**
**80331 München (DE)**

(56) Entgegenhaltungen:
**EP-B1- 0 490 329**    **WO-A2-2005/101921**
**DE-A1- 10 128 588**    **US-A- 5 623 187**
**US-A1- 2004 047 166**    **US-B1- 6 304 465**

EP 1 803 336 B1

**Beschreibung**

Die Erfindung bezieht sich auf Verfahren zum Betrieb eines Betriebsgeräts für Leuchtmittel, wie beispielsweise eines elektronischen Vorschaltgeräts (EVG) für Gasentladungslampen. Das Betriebsgerät weist dabei eine Leistungsfaktor-Korrekturschaltung (PFC, Power Factor Correction) zur Verringerung von Oberschwingungen bei der Eingangsstromaufnahme auf, die bspw. in Form eines Schaltreglers (Hochsetzstellers) mit einem getakteten Schalter ausgebildet ist.

Die Erfindung bezieht sich weiterhin auf ein Computersoftware-Programmprodukt zur Unterstützung eines derartigen Verfahrens, auf einen Steuerbaustein, der durch Programmierung und/oder Hartverdrahtung ein derartiges Verfahren unterstützen kann, sowie auf ein Betriebsgerät für Leuchtmittel.

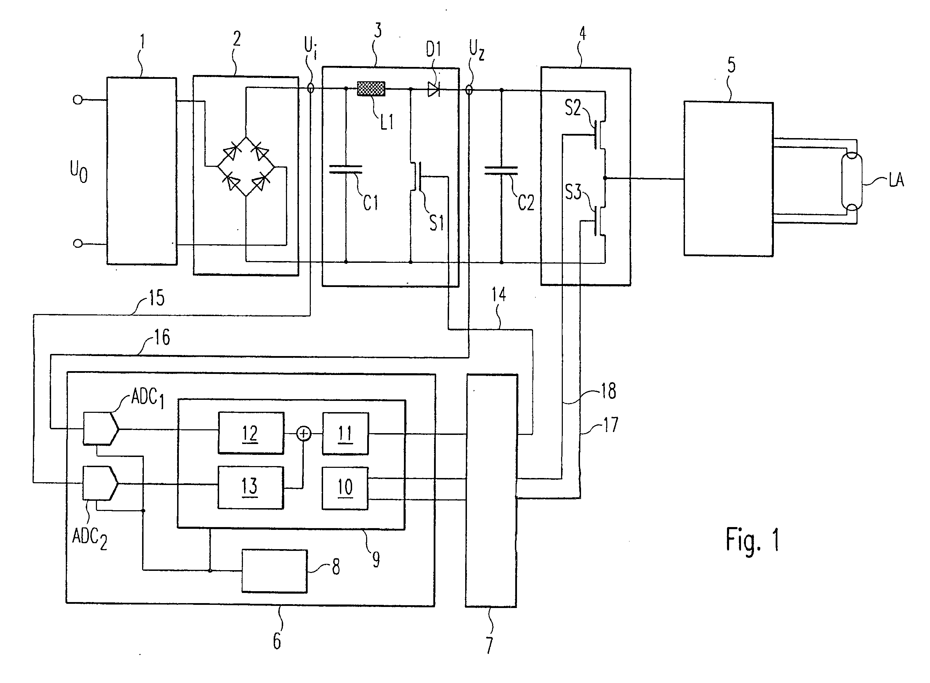

Wie gesagt, die vorliegende Erfindung bezieht sich auf Betriebsgeräte für Leuchtmittel, die PFC-Schaltungen aufweisen. Ein derartiges, aus der DE 10128588 A1 bekanntes Betriebsgerät ist in Fig. 1 dargestellt. Genauer gesagt handelt es sich bei dem in Fig. 1 dargestellten Gerät um ein elektronisches Vorschaltgerät (EVG). Dieses in Fig. 1 dargestellte Vorschaltgerät ist eingangsseitig über ein Hochfrequenzfilter 1 an eine Netzversorgungsspannung $U_0$ angeschlossen. Der Ausgang des Hochfrequenzfilters 1 ist mit einer Gleichrichterschaltung 2 in Form eines Vollbrückengleichrichters verbunden. Die von der Gleichrichterschaltung 2 gleichgerichtete Versorgungswechselspannung stellt zugleich die Eingangsspannung $U_i$ für die Glättungsschaltung 3 dar. Diese wird im vorliegenden Beispiel durch einen Glättungskondensator C1 sowie einen eine Induktivität L1, einen steuerbaren Schalter in Form eines MOS-Feldeffekttransistors S1 und eine Diode D1 aufweisenden Hochsetzsteller gebildet. Anstelle des Hochsetzstellers können auch andere Schaltregler verwendet werden. Die PFC-Schaltung wird durch die Wahl der Ansteuerung des Schalters S1 gebildet.

Dokument US 2004047166 A1 beschreibt ein kombiniertes Energieversorgungs- und Treibersteuermodul mit Gleichrichterschaltung, Vermittlungsschaltungsanordnung, und Ansteuerschaltung zum Bereitstellen von Ausgangsleistung an einer Last. Eine gleichgerichtete Ausgabe einer Eingangsstromsquelle wird zur Erzeugung eines Gleichstroms verwendet. Die Vermittlungsschaltungsanordnung empfängt den Gleichstrom und moduliert den Eingangsstrom, der von der Stromquelle entnommen wird. Ein intelligentes Steuermodul weist einer Steuerschaltung, wie beispielsweise einen digitalen Prozessor auf, um die Vermittlungsschaltungsanordnung zu steuern. Der Leistungsfaktor wird durch das Modulieren des Eingangsstromes näher an den 'In-Phase-Zustand' mit der Spannung geführt. Es wird auch eine Leistungsfaktorkorrekturschaltung beschrieben, in der ein digitaler Prozessor wellenförmig verlaufende Werte aus einer Look-up-Tabelle ausliest und den wellenförmig eingehenden Strom basierend auf den Werten moduliert. Ein Nulldurchgangssensor, der mit der Eingangsstromquelle verbunden ist, weist den digitalen Prozessor an, wann begonnen werden soll Werte aus der Nachschlagetabelle zu lesen.

Dokument US 5,623,187 A beschreibt ein Hochfrequenz-HID-Vorschaltgerät mit einem Inverter zum Betrieb der HID-Lampe bei hoher Frequenz und einer Lichtbogen-Instabilitäts-Steuerung, die die Betriebsfrequenz des Inverters tastet und einstellt, um eine akustische Resonanz des Lichtbogens zu vermeiden. Das Vorschaltgerät sorgt dafür, dass die an die Lampe gelieferte Leistung im Wesentlichen trotz Veränderungen in der Aufnahme des Inverters, die mit Änderungen in der Betriebsfrequenz auftreten, konstant bleibt. Eine Leistungssteuerung wird durch Tasten der Lampenleistung und Steuerung eines Boost-Konverters ermöglicht, um die Busspannung, die den Inverter versorgt, zu variieren. Der Boost-Konverter wird durch die Lampenzündung gesteuert, wenn die Last, die durch die HID-Lampe bereitgestellt wird, gering ist, um die Busspannung auf einem vorbestimmten Pegel zu halten. Das Vorschaltgerät verwendet Techniken, die dazu dienen, HID-Lampen verschiedener Arten, Wattagen und verschiedene Hersteller trotz des Auftretens akustischer Resonanzen/ Bogeninstabilitäten über einen breiten Frequenzbereich zu betreiben.

Dokument US 6,304,465 B1 beschreibt einen Leistungsregler, beinhaltend eine mit einem Ausgang einer Gleichgrößen-Energieversorgungsquelle verbundene Spule zum Gleichrichten einer Wechselspannung, einen Lade-/Entladekondensator zum Laden eines Stroms, der von der Gleichgrößen-Energieversorgungsquelle über die Spule und eine Rücklaufverhinderungsdiode zugeführt wird, eine Schaltvorrichtung, die parallel zu der Gleichgrößenenergieversorgungsquelle mit einem Verbindungspunkt der Spule und der Rücklauf-Verhinderungsdiode verbunden ist, und einen Mikrocomputer zum Erfassen eines Nulldurchgangspunktes von entweder einer Magnetfeldenergie, die in der Spule erzeugt wird, oder eines Stroms, der durch die Spule fließt, und zum Bringen der Schaltvorrichtung zum Leiten als Reaktion auf das Erfassen des Nulldurchgangspunkts. Dies ermöglicht es, ein Problem einer Vorrichtung im Stand der Technik zu lösen, dass die Schaltdauer der Schaltvorrichtung nicht in Übereinstimmung mit Variablen, wie z.B. einer Temperaturänderung, von Fehlern in Schaltungskonstanten und dgl. geändert werden kann, da Schaltdauern der Schaltvorrichtung vorbestimmte Werte sind.

Durch ein entsprechendes Schalten des MOS-Feldeffekttransistors S1 wird in an sich bekannter Weise (s. beispielsweise auch WO 99/34647 A1) eine über dem nachfolgend angeordneten Speicherkondensator C2 anliegende Zwischenkreisspannung $U_z$ erzeugt, die dem Wechselrichter 4 zugeführt wird. Der Wechselrichter 4 wird im vorliegenden Beispiel durch zwei weitere in einer Halbbrückenanordnung angeordnete MOS-Feldeffekttransistoren S2 und S3 gebildet. Durch hochfrequentes Takten dieser beiden Schalter S2 und S3 wird an derem Mittenabgriff eine hochfrequente Wechselspannung erzeugt, die dem Lastkreis 5 mit der daran angeschlossenen Gasentladungslampe LA zugeführt wird.

Die Funktionsweise dieses Hochsetzstellers ist im Prinzip bereits bekannt und soll daher im folgenden lediglich kurz zusammengefasst werden. Ist der Feldeffekttransistor S1 leitend, steigt der Strom in der Induktivität L1 linear an. Sperrt hingegen der Feldeffekttransistor S1, entlädt sich der Strom in den Speicherkondensator C2. Durch ein gezieltes Ansteuern des Schalters S1 kann die Energieaufnahme des Hochsetzstellers und damit auch die an dem Speicherkondensator C2 anliegende Zwischenkreisspannung (Busspannung) $U_z$ beeinflusst werden.

Das Ansteuern des Schalters S1 des Hochsetzstellers erfolgt durch eine Steuerschaltung 6, welche entsprechende Schaltinformationen erzeugt und an eine sich an die Steuerschaltung 6 anschließende Treiberschaltung 7 übermittelt. Diese wiederum setzt die Schaltinformationen in entsprechende Leistungs-Steuersignale um und steuert über die Leitung 14 das Gate des Feldeffekttransistors S1. In gleicher Weise werden von der Steuerschaltung 6 und der Treiberschaltung 7 auch Signale zum Ansteuern der beiden Feldeffekttransistoren S2 und S3 des Wechselrichters 4 erzeugt. Sämtliche Komponenten der Steuereinheit 6 können beispielsweise über einen zentralen Taktgeber 8 synchronisiert werden, der ihnen entsprechende Taktsignale übermittelt. Die Steuereinheit 6 ist als anwendungsspezifische integrierte Schaltung (ASIC) ausgebildet und nimmt dementsprechend nur wenig Platz ein.

Das Berechnen der Schaltinformationen für den Schalter S1 des Hochsetzstellers erfolgt durch einen innerhalb der Steuerschaltung 6 angeordneten digitalen Regelkreis 9. Hierzu weist die Steuerschaltung 2 Analog/Digital-Wandler $ADC_1$ und $ADC_2$ auf, welche die über die Eingangsleitung 15 zugeführte Eingangsspannung $U_i$ und die über die Eingangsleitung 16 zugeführte Zwischenkreisspannung $U_z$ in Digitalwerte umsetzen.

Der Rechenblock 12 dient dazu, auf Basis des aktuellen Werts der Zwischenkreisspannung $U_z$ eine geeignete Einschaltdauer für den Schalter S1 zu berechnen. Bevor allerdings anhand der von dem Rechenblock 12 bestimmten Einschaltdauer ein Steuersignal für den Schalter S1 erzeugt wird, wird die Einschaltdauer allerdings noch durch einen Zusatzwert ergänzt (verlängert), der von dem Schaltzeit-Verlängerungsblock 13 bestimmt wird. Hierzu weist der Schaltzeit-Verlängerungblock 13 einen Speicher mit einer Tabelle auf, die jeden Wert der Eingangsspannung $U_i$ ein bestimmtes Zeitintervall zuordnet, um das die Einschaltzeit des Schalters S1 verlängert wird. Der Wert dieses Zusatzintervalles wird der von dem Rechenblock 12 berechneten Einschaltdauer wie gesagt hinzugefügt und einem Ausgangsblock 11 übermittelt. Dieser erzeugt eine entsprechende Schaltinformation, die der Treiberschaltung 7 zugeführt wird, welche dann schließlich durch ein entsprechendes Steuersignal über die Leitung 14 an den Schalter S1 übermittelt.

In allgemeinster Weise besteht der Zusammenhang zwischen der Einschaltverlängerung und der Eingangsspannung darin, dass die Einschaltverlängerung umso größer ist, je niedriger die Eingangsspannung $U_i$ ist. Insbesondere wird also die Einschaltverlängerung im Bereich der Nulldurchgänge der sinusförmigen Wechselspannung erfolgen, die am Eingang anliegt.

Die geschilderte aus dem Stand der Technik bekannte Schaltung ist für den AC-Betrieb gut geeignet, schließlich erfolgt ja die Einschaltzeitdauerverlängerung abhängig von einer Erfassung der Nulldurchgänge der anliegenden sinusförmigen Wechselspannung $U_0$.

Allgemein ist dagegen bei Anliegen einer DC-Spannung an eine derartige Schaltung die Einschaltzeitdauerverlängerung außer Kraft. Das Anliegen einer DC-Spannung erfolgt beispielsweise im Notbetrieb. Die bekannte Schaltung arbeitet also im Notbetrieb ohne Einschaltdauerverlängerung und somit mit konstanter Frequenz. Diese feste Betriebsfrequenz der Leistungsfaktor-Korrekturschaltung (PFC) 3 erzeugt somit Störungen mit im wesentlichen fester Frequenz. Dies kann Probleme mit den auch für Notlichtbetrieb (DC-Betrieb) geltenden EMV-Vorschriften geben.

Die vorliegende Erfindung hat es sich daher zur Aufgabe gesetzt, die EMV-Veträglichkeit bei DC-Betrieb zu verbessern.

Die Aufgabe wird gelöst durch die Merkmale der unabhängigen Ansprüche.

Die abhängigen Ansprüche bilden den zentralen Gedanken der Erfindung in besonders vorteilhafter Weise weiter.

Dies bedeutet, dass für den AC-Betrieb die aus Fig. 1 bekannte Schaltung weiter verwendet werden kann. Indessen wird vorgeschlagen, im DC-Betrieb die Betriebsfrequenz des PFC zu modulieren, um sozusagen das Störspektrum der Schaltung auf Nebenbänder außerhalb der Mitten-Betriebsfrequenz zu "verwässern". Dies ermöglicht eine Einhaltung der EMV-Vorschriften. Die Modulation kann dabei in einer Änderung der Modulationstiefe (d.h. Verlängerung/Verkürzung der Einschaltzeit des getakteten Schalters) und/oder der Änderung der Schaltfrequenz liegen.

Es ist also ein Verfahren zum Betrieb eines Betriebsgeräts für Leuchtmittel, insbesondere eines elektronischen Vorschaltgeräts (EVG) für Gasentladungslampen vorgesehen. Das Betriebsgerät weist dabei eine Leistungsfaktor-Korrekturschaltung (PFC) zur Verringerung von Oberschwingungen bei der Eingangsstromaufnahme auf. Dabei wird die Arbeitsfrequenz der Leistungsfaktor-Korrekturschaltung bei eingangsseitigem Anliegen einer DC-Spannung moduliert.

Die Leistungsfaktor-Korrekturschaltung (PFC) kann in Form eines Schaltreglers mit getaktetem Schalter ausgebildet sein. Zur Verringerung von Störungen kann der Schalter dabei derart getaktet werden, dass seine EinschaltZeitdauer und/oder seine Schaltfrequenz bei eingangsseitigem Anliegen einer DC-Spannung moduliert wird.

Die Modulationsfrequenz der Leistungsfaktor-Korrekturschaltung (PFC) kann dabei derart gewählt sein, dass sich in der Ausgangsspannung der Leistungsfaktor-Korrekturschaltung (PFC) eine dementsprechende Welligkeit einstellt. Mit anderen Worten, die Modulation der PFC-Schaltung wird durch diese selbst bzw. eine Zwischenbusregelung nicht ausgesteuert. Vielmehr erfolgt die Kompensierung dieses "Ripples" in der Busspannung (d.h. die Zwischenkreisspannung, die von der Leistungsfaktor-Korrekturschaltung ausgegeben wird und am Speicherkondensator anliegt) zur Konstanthaltung der Leistungsaufnahme der Leuchtmittel durch Frequenzvariation des Wechselrichters. Dazu kann die Steuereinheit in an sich bekannter Weise einen Betriebsparameter wie beispielsweise den Lampenstrom und die Lampenspannung erfassen und abhängig von dieser Erfassung und einer Abweichung von einem Sollwert die Frequenz des Wechselrichters variieren.

Die Modulationsfrequenz der Leistungsfaktor-Korrekturschaltung kann beispielsweise in einem Bereich zwischen 15 Hz und 500 Hz, vorzugsweise zwischen 90 und 130 Hz gewählt werden. Beim Stand der Technik wird die Modulation bekanntlich mit den Nulldurchgängen der Wechselspannung verknüpft, so dass sich eine Modulationsfrequenz von 100 Hz (Europa) bzw. 120 Hz (USA) ergeben kann. Bei der Erfindung ist dagegen die Modulationsfrequenz frei einstellbar und optimierbar.

Bei Anliegen einer DC-Spannung kann die Modulation natürlich nicht mehr durch den Nulldurchgänge der Eingangsspannung ausgelöst werden. Erfindungsgemäß kann daher vorgesehen sein, dass die Modulation der PFC-Schaltung mittels einer Timerschaltung erfolgt, mittels der Werte aus einer Look-up-Tabelle ausgelesen werden. Diese Werte sind wie beim Stand der Technik Verlängerungwerte, die auf den eigentlichen Reglerwert $T_{ON\_Regler}$ der Steuerschaltung aufgeschlagen werden. Der Reglerwert $T_{ON\_Regler}$ ist dabei die Einschaltzeitdauer für den Schalter, die von einem Regler zur Konstanthaltung der Ausgangsspannung des PFC berechnet wurde.

Erfindungsgemäß kann automatisch auf die Modulation mittels der Timerschaltung und der Look-up-Tabelle umgeschaltet werden, sobald das Betriebsgerät das Anliegen einer DC-Spannung erkennt. Grundsätzlich ist das automatische Erkennen des Notlichtbetriebs (Anliegen einer DC-Spannung) bereits aus der EP 490329 B1 bekannt. Es wird auf die dortige Fig. 4, Bezugszeichen C25 und R21 verwiesen.

Die Leistungsfaktor-Korrekturschaltung (PFC) kann im sogenannten Grenzmodus ("Borderline Mode") betrieben werden.

Erfindungsgemäß ist weiterhin ein Computersoftware-Programmprodukt vorgesehen, das ein derartiges Verfahren unterstützt, wenn es auf einer Recheneinrichtung in einem Betriebsgerät läuft bzw. durch Hartverdrahtung (ASIC) implementiert ist.

Weiterhin ist erfindungsgemäß auch ein Steuerbaustein (Mikrocontroller, ASIC, etc.) für ein Leuchtmittel-Betriebsgerät vorgesehen, der zur Unterstützung eines derartigen Verfahrens ausgelegt ist.

Schließlich schlägt die Erfindung auch ein Betriebsgerät für Leuchtmittel vor.

Weitere Merkmale, Aspekte und Vorteile der vorliegenden Erfindung sollen nunmehr anhand der Erläuterung eines Ausführungsbeispiels deutlich gemacht werden. In den begleitenden Figuren zeigen

Fig. 1   eine aus dem Stand der Technik (DE 101 28 588 A1) bekannte Schaltung, und

Fig. 2   eine erfindungsgemäße Schaltung.

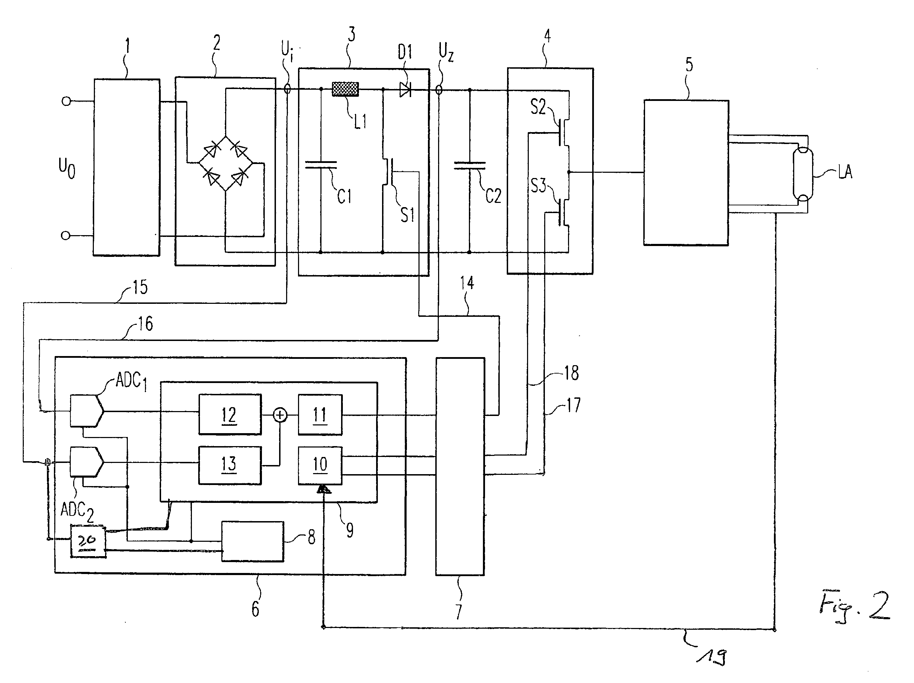

Es ist zu verstehen, dass erfindungsgemäß für den AC-Betrieb die Schaltung von Fig. 1 beibehalten werden kann. Fig. 2 zeigt nur diejenigen Bauteile, die für einen Betrieb mit AC-Netzspannung notwendig sind. Im übrigen entsprechen sich diejenigen Bauteile, die in den beiden Figuren dieselben Bezugszeichen tragen.

Um das Störspektrum der Schaltung auch im Notfallbetrieb (DC-Netzbetrieb) zu verbessern, weist die erfindungsgemäße Schaltung wie in Fig. 2 dargestellt, eine Steuerschaltung 6 auf, die mittels eines Signals 15, das die gleichgerichtete Eingangsspannung $U_i$ wiedergibt, und einer Schaltung 20 das Anliegen einer AC- oder DC-Spannung erkennt. Dabei kann beispielsweise eine Schaltung verwendet werden, die aus Fig. 4 der EP 490329 A1 grundsätzlich bekannt ist. Diese DC-Erkennungsschaltung 20 steuert einen Taktgenerator 8 an. Dieser Taktgenerator 8 ersetzt sozusagen die Nulldurchgänge der bei DC- nicht mehr vorhandenen Netzspannung. Der Taktgenerator 8 steuert somit das Auslesen der Verlängerungswerte für die Einschaltzeitdauer des Schalters S1 aus einer Look-up-Tabelle an.

Wie grundsätzlich aus dem Stand der Technik bekannt, wird erfindungsgemäß ggf. auch die Busspannung $U_z$ gemessen und der Steuereinheit 6 zurückgeführt (Busspannungssignal 16), um durch Variation der Schaltfrequenz des Schalters S1 die Busspannung $U_z$ auf einen Sollwert $U_{REF}$ zu regeln. Die Regelung der Busspannung ergibt also einen Reglerwert $T_{ON\_Regler}$ für die Ein- und Ausschaltzeitdauer des Schalters, welcher Reglerwert $T_{ON\_Regler}$ gemäss der Erfindung auch bei DC-Betrieb mit einem sich periodisch verändernden Zusatzwert $T_{ON\_ADD}$ beaufschlagt wird, um die Modulationstiefe und/oder die Schaltfrequenz zur Verbesserung des Störspektrums zu modulieren.

Diese Regelung der Busspannung $U_z$ mittels Erfassung der Busspannung 16 und durch den Regelkreis 9 ist indessen verhältnismäßig langsam im Vergleich zur Modulationsfrequenz bzw. Änderung der Einschaltzeitdauer $t_{on}$ des Schalters S1, so dass diese Modulation in der Busspannung $U_z$ also nicht ausgeregelt wird und die Busspannung eine entsprechende im Verhältnis zur Schaltfrequenz des Schalter S1 niederfrequente Welligkeit aufweisen wird.

Diese Welligkeit der Busspannung wird indessen kompensiert durch die Rückführung eines die Leuchtmittel-Leistung wiedergebenden Parameters 19 (Leuchtmittelspannung, Leuchtmittelstrom, Erfassung der Lichtleistung über einen optischen Sensor oder dgl.) als Istwert und die Ansteuerung der Schaltfrequenz des Wechselrichters 4 zur Konstanthaltung der Leuchtmittel-Leistung auf einen vorgegebenen Sollwert.

Erfindungsgemäß werden die aus der Look-up-Tabelle ausgelesenen Zusatzwerte $T_{on\_add}$ in einen Flash-Speicher des ASICs 6 geladen. Dann werden diese $T_{on\_add}$-Werte vom Schaltzeitverlängerungsblock 13 zur regulären $T_{on\_Regler}$ vom Regler 12 addiert:

$$T_{on} = T_{on\_add} + T_{on\_Regler}$$

Dabei wird jeder $T_{on}$-Index für eine einstellbare Zeitdauer ('Sweep value') eingestellt und anschließend der nächste Index aus der Look-Up-Tabelle ausgewählt. Durch Veränderung des Sweep values kann die Modulationsfrequenz eingestellt werden.

## Patentansprüche

1. Verfahren zum Betrieb eines Betriebsgeräts für Leuchtmittel, insbesondere eines Elektronischen Vorschaltgeräts für Gasentladungslampen (LA), wobei das Betriebsgerät eine Leistungsfaktor-Korrekturschaltung (3), aufweisend einen getakteten Schalter (S1), zur Verringerung von Oberschwingungen bei der Eingangsstromaufnahme aufweist, **dadurch gekennzeichnet,** **dass** das Anliegen einer AC- oder DC-Spannung am Eingang des Betriebsgeräts erkannt wird, und die Einschaltzeitdauer ($t_{ON}$) des getakteten Schalters (S1) der Leistungsfaktor-Korrekturschaltung (3) bei eingangsseitigem Anliegen einer DC-Spannung, die keine Nulldurchgänge aufweist, moduliert wird, wobei die Modulation mittels einer Timerschaltung (8) erfolgt, mittels der Verlängerungswerte ($T_{on\_add}$) aus einer Look-up-Tabelle ausgelesen werden, und wobei automatisch auf die Modulation mittels der Timerschaltung (8) und der Look-up-Tabelle umgeschaltet wird, sobald das Betriebsgerät das Anliegen der DC-Spannung erkennt, wobei die Verlängerungswerte ($T_{on\_add}$) nacheinander ausgewählt werden, und jeder ausgewählte Verlängerungswert ($T_{on\_add}$) für eine einstellbare Zeitdauer eingestellt wird, wobei zur Konstanthaltung der Ausgangsspannung (Uz) der Leistungsfaktor-Korrekturschaltung (3) ein Reglerwert ($T_{on\_Regler}$) für die Einschaltzeitdauer

($t_{ON}$) des getakteten Schalters (S1) berechnet wird, und der eingestellte Verlängerungswert ($T_{on\_add}$) zu dem Reglerwert ($T_{on\_Regler}$) addiert wird.

2. Verfahren zum Betrieb eines Betriebsgeräts für Leuchtmittel nach Anspruch 1, wobei die Leistungsfaktor-Korrekturschaltung (3) als Schaltregler mit dem getakteten Schalter (S1) ausgebildet ist.

3. Verfahren nach Anspruch 1 oder 2, **dadurch gekennzeichnet,** **dass** die Frequenz der Modulation der Leistungsfaktor-Korrekturschaltung (3) derart gewählt wird, dass sich in der Ausgangsspannung der Leistungsfaktor-Korrekturschaltung (3) eine nicht ausgeregelte Welligkeit einstellt.

4. Verfahren nach Anspruch 3, **dadurch gekennzeichnet,** **dass** die Welligkeit der Ausgangsspannung zur Konstanthaltung der Leistung der Leuchtmittel in einem folgenden Leuchtmittel-Regelkreis kompensiert wird.

5. Verfahren nach Anspruch 4, **dadurch gekennzeichnet,** **dass** der Leuchtmittel-Regelkreis die Welligkeit der zugeführten Ausgangsspannung durch Variation der Betriebsfrequenz der Leuchtmittel kompensiert.

6. Verfahren nach einem der vorhergehenden Ansprüche, **dadurch gekennzeichnet,** **dass** die Frequenz der Modulation der Leistungsfaktor-Korrekturschaltung (3) in einem Bereich zwischen 50 Hz und 500Hz, vorzugsweise 90 Hz bis 130 Hz gewählt wird.

7. Verfahren nach einem der vorhergehenden Ansprüche, **dadurch gekennzeichnet,** **dass** die Leistungsfaktor-Korrekturschaltung (3) im sogenannten Grenzmodus betrieben wird.

8. Computersoftware-Programmprodukt, **dadurch gekennzeichnet,** **dass** es ein Verfahren nach einem der vorhergehenden Ansprüche unterstützt, wenn es auf einer Recheneinrichtung in einem Betriebsgerät läuft bzw. durch Hartverdrahtung implementiert ist.

9. Betriebsgerät für Leuchtmittel, insbesondere Elektronisches Vorschaltgerät für Gasentladungslampen (LA), wobei das Betriebsgerät eine Leistungsfaktor-Korrekturschaltung (3), aufweisend einen getakteten Schalter (S1), zur Verringerung von Oberschwingungen bei der Eingangsstromaufnahme aufweist, **gekennzeichnet durch** eine Steuerschaltung (6) aufweisend:

Mittel zum Erkennen des Anliegens einer AC- oder DC-Spannung am Eingang des Betriebsgeräts, wobei die Einschaltzeitdauer ($t_{ON}$) des getakteten Schalters (S1) der Leistungsfaktor-Korrekturschaltung (3) bei eingangsseitigem Anliegen einer DC-Spannung, die keine Nulldurchgänge aufweist, moduliert ist,

eine Timerschaltung (8) und eine Look-up-Tabelle, wobei vorgesehen ist dass die Modulation mittels der Timerschaltung (8) erfolgt, mittels der Verlängerungswerte ($T_{on\_add}$) aus der Look-up-Tabelle auslesbar sind, und wobei das Betriebsgerät dazu eingerichtet ist, automatisch auf die Modulation mittels der Timerschaltung (8) und der Look-up-Tabelle umzuschalten, sobald die Steuerschaltung (6) das Anliegen der DC-Spannung erkennt,

wobei die Verlängerungswerte ($T_{on\_add}$) nacheinander ausgewählt werden, und jeder ausgewählte Verlängerungswert ($T_{on-add}$) für eine einstellbare Zeitdauer eingestellt wird,

und Mittel, die dazu ausgestaltet sind, zur Konstanthaltung der Ausgangsspannung (Uz) der Leistungsfaktor-Korrekturschaltung (3) ein Reglerwert ($T_{on\_Regler}$) für die Einschaltzeitdauer ($t_{ON}$) des getakteten Schalters (S1) zu berechnen, und den eingestellten Verlängerungswert ($T_{on\_add}$) zu dem Reglerwert ($T_{on-Regler}$) zu addieren.

10. Betriebsgerät für Leuchtmittel nach Anspruch 9, wobei die Leistungsfaktor-Korrekturschaltung (3) in Form eines Schaltreglers mit dem getakteten Schalters (S1) ausgebildet ist.

11. Betriebsgerät nach einem der Ansprüche 9 oder 10, **dadurch gekennzeichnet,** **dass** die Frequenz der Modulation der Leistungsfaktor-Korrekturschaltung (3) derart gewählt ist, dass sich in der Ausgangsspannung der Leistungsfaktor-Korrekturschaltung (3) eine dementsprechende Welligkeit einstellt.

12. Betriebsgerät nach Anspruch 11, **dadurch gekennzeichnet,** **dass** die mit der Welligkeit behaftete Ausgabgsspannung einem Leuchtmittel-Regelkreis zugeführt wird, der zur Konstanthaltung der Leistung der Leuchtmittel die Betriebsfrequenz der Leuchtmittel variiert.

13. Betriebsgerät nach einem der Ansprüche 9 bis 12, **dadurch gekennzeichnet,** **dass** die Frequenz der Modulation der Leistungsfaktor-Korrekturschaltung in einem Bereich zwischen 50 Hz und 500Hz, vorzugsweise 90 Hz bis 130 Hz gewählt ist.

14. Betriebsgerät nach einem der Ansprüche 9 bis 13, **dadurch gekennzeichnet,** **dass** die Leistungsfaktor-Korrekturschaltung für den Grenzmodusbetrieb ausgelegt ist.

**Claims**

1. Method for operating an operating device for luminous means, in particular an electronic ballast for gas discharge lamps (LA), the operating device having a power factor correction circuit (3), having a clocked switch (S1), for reducing harmonics in the input power consumption,
**characterized in that**
the application of an AC or DC voltage to the input of the operating device is detected, and the switched-on duration ($t_{ON}$) of the clocked switch (S1) of the power factor correction circuit (3) is modulated when a DC voltage which does not have any zero crossings is applied to the input side,
the modulation being effected using a timer circuit (8) which is used to read extension values ($T_{on\_add}$) from a look-up table, and the process being automatically changed over to the modulation using the timer circuit (8) and the look-up table as soon as the operating device detects the application of the DC voltage,
the extension values ($T_{on\_add}$) being selected in succession, and each selected extension value ($T_{on\_add}$) being set for an adjustable duration,
a controller value ($T_{on\_controller}$) being calculated for the switched-on duration ($t_{ON}$) of the clocked switch (S1) in order to keep the output voltage (Uz) of the power factor correction circuit (3) constant, and the extension value ($T_{on\_add}$) which has been set being added to the controller value ($T_{on\_controller}$).

2. Method for operating an operating device for luminous means according to Claim 1, the power factor correction circuit (3) being in the form of a switching controller with the clocked switch (S1).

3. Method according to Claim 1 or 2,
**characterized in that**
the modulation frequency of the power factor correction circuit (3) is selected in such a manner that a ripple which has not been corrected is established in the output voltage of the power factor correction circuit (3).

4. Method according to Claim 3,
**characterized in that**
the ripple in the output voltage is compensated for in a downstream luminous means control loop in order to keep the power of the luminous means constant.

5. Method according to Claim 4, **characterized in that** the luminous means control loop compensates for the ripple in the supplied output voltage by varying the operating frequency of the luminous means.

6. Method according to one of the preceding claims, **characterized in that** the modulation frequency of the power factor correction circuit (3) is selected in a range of 50 Hz to 500 Hz, preferably 90 Hz to 130 Hz.

7. Method according to one of the preceding claims, **characterized in that** the power factor correction circuit (3) is operated in the so-called limit mode.

8. Computer software program product, **characterized in that** it supports a method according to one of the preceding claims when it runs on a computing device in an operating device or is implemented by means of hard-wiring.

9. Operating device for luminous means, in particular electronic ballast for gas discharge lamps (LA), the operating device having a power factor correction circuit (3), having a clocked switch (S1), for reducing harmonics in the input power consumption, **characterized by** a control circuit (6) having:

means for detecting the application of an AC or DC voltage to the input of the operating device, the switched-on duration ($t_{ON}$) of the clocked switch (S1) of the power factor correction circuit (3) being modulated when a DC voltage which does not have any zero crossings is applied to the input side,
a timer circuit (8) and a look-up table, in which case provision is made for the modulation to be effected using the timer circuit (8) which can be used to read extension values ($T_{on\_add}$) from the look-up table, and the operating device being set up to automatically change over to the modulation using the timer circuit (8) and the look-up table as soon as the control circuit (6) detects the application of the DC voltage,
the extension values ($T_{on\_add}$) being selected in succession, and each selected extension value ($T_{on\_add}$) being set for an adjustable duration, and means which are configured to calculate a controller value ($T_{on\_controller}$) for the switched-on duration ($t_{ON}$) of the clocked switch (S1) in order to keep the output voltage (Uz) of the power factor correction circuit (3) constant, and to add the extension value ($T_{on\_add}$) which has been set to the controller value ($T_{on\_controller}$).

10. Operating device for luminous means according to Claim 9, the power factor correction circuit (3) being in the form of a switching controller with the clocked switch (S1).

11. Operating device according to either of Claims 9 and 10, **characterized in that** the modulation frequency of the power factor correction circuit (3) is selected in such a manner that a corresponding ripple is established in the output voltage of the power factor correction circuit (3).

12. Operating device according to Claim 11, **characterized in that** the output voltage with the ripple is supplied to a luminous means control loop which varies the operating frequency of the luminous means in order to keep the power of the luminous means constant.

13. Operating device according to one of Claims 9 to 12, **characterized in that** the modulation frequency of the power factor correction circuit is selected in a range of 50 Hz to 500 Hz, preferably 90 Hz to 130 Hz.

14. Operating device according to one of Claims 9 to 13, **characterized in that** the power factor correction circuit is designed for limit mode operation.

**Revendications**

1. Procédé pour le fonctionnement d'un dispositif de commande pour moyens d'éclairage, en particulier d'un ballast électronique pour lampes à décharge de gaz (LA), dans lequel le dispositif de commande présente un circuit de correction de facteur de puissance (3), présentant un commutateur cadencé (S1), destiné à réduire des harmoniques dans la consommation de courant d'entrée,
**caractérisé en ce que**
l'application d'une tension alternative ou continue à l'entrée du dispositif de commande est détectée, et la durée de mise en circuit ($T_{ON}$) du commutateur cadencé (S1) du circuit de correction de facteur de puissance (3) est modulée en cas d'application à l'entrée d'une tension continue, qui ne présente pas de passage par zéro,
dans lequel la modulation a lieu au moyen d'un circuit minuteur (8), au moyen duquel des valeurs d'allongement ($T_{on\_add}$) sont lues d'un tableau de correspondance, et dans lequel un passage à la modulation au moyen du circuit minuteur (8) et du tableau de correspondance est effectué automatiquement dès que le dispositif de commande détecte l'application d'une tension continue,

dans lequel les valeurs d'allongement ($T_{on\_add}$) sont choisies successivement, et chaque valeur d'allongement choisie ($T_{on\_add}$) est réglée pour une durée réglable,

dans lequel, pour maintenir constante la tension de sortie (Uz) du circuit de correction de facteur de puissance (3), une valeur de régulation ($T_{on\_Regler}$) est calculée pour la durée de mise en circuit ($T_{ON}$) du commutateur cadencé (S1), et la valeur d'allongement réglée ($T_{on\_add}$) est ajoutée à la valeur de régulation ($T_{on\_Regler}$).

2. Procédé pour le fonctionnement d'un dispositif de commande pour moyens d'éclairage selon la revendication 1, dans lequel le circuit de correction de facteur de puissance (3) est configuré en tant que régulateur à découpage avec le commutateur cadencé (S1).

3. Procédé selon la revendication 1 ou 2,
   **caractérisé en ce que**
   la fréquence de la modulation du circuit de correction de facteur de puissance (3) est choisie de telle sorte qu'une ondulation non régulée est obtenue dans la tension de sortie du circuit de correction de facteur de puissance (3).

4. Procédé selon la revendication 3,
   **caractérisé en ce que**
   l'ondulation de la tension de sortie est compensée pour maintenir constante la puissance des moyens d'éclairage dans un circuit de régulation de moyens d'éclairage suivant.

5. Procédé selon la revendication 4,
   **caractérisé en ce que**
   le circuit de régulation de moyens d'éclairage compense l'ondulation de la tension de sortie fournie au moyen d'une variation de la fréquence de fonctionnement des moyens d'éclairage.

6. Procédé selon l'une des revendications précédentes,
   **caractérisé en ce que**
   la fréquence de la modulation du circuit de correction de facteur de puissance (3) est choisie dans un domaine entre 50 Hz et 500 Hz, de préférence de 90 Hz à 130 Hz.

7. Procédé selon l'une des revendications précédentes,
   **caractérisé en ce que**
   le circuit de correction de facteur de puissance (3) fonctionne dans le mode borderline.

8. Programme produit d'ordinateur,

   **caractérisé en ce qu'**il implémente un procédé selon l'une des revendications précédentes lorsqu'il tourne sur un dispositif de calcul dans un dispositif de commande ou lorsqu'il est implémenté par câblage.

9. Dispositif de commande pour moyens d'éclairage, en particulier un ballast électronique pour lampes à décharge de gaz (LA), dans lequel le dispositif de commande présente un circuit de correction de facteur de puissance (3), présentant un commutateur cadencé (S1), destiné à réduire des harmoniques dans la consommation de courant d'entrée,
   **caractérisé par** un circuit de commande (6) présentant :

   des moyens pour détecter l'application d'une tension alternative ou continue à l'entrée du dispositif de commande, la durée de mise en circuit ($T_{ON}$) du commutateur cadencé (S1) du circuit de correction de facteur de puissance (3) étant modulée en cas d'application à l'entrée d'une tension continue, qui ne présente pas de passage par zéro,

   un circuit minuteur (8) et un tableau de correspondance, dans lequel il est prévu que la modulation est effectuée au moyen du circuit minuteur (8), au moyen duquel des valeurs d'allongement ($T_{on\_add}$) sont susceptible d'être lues du tableau de correspondance, et dans lequel le dispositif de commande est configuré pour passer automatiquement à la modulation au moyen du circuit minuteur (8) et du tableau de correspondance dès que le circuit de commande (6) détecte l'application d'une tension continue,

   dans lequel les valeurs d'allongement ($T_{on\_add}$) sont choisies successivement, et chaque valeur d'allongement choisie ($T_{on\_add}$) est réglée pour une durée réglable,

   et des moyens qui, pour maintenir constante la tension de sortie (Uz) du circuit de correction de facteur de puissance (3), sont configurés pour calculer une valeur de régulation ($T_{on\_Regler}$) pour la durée de mise en circuit ($T_{ON}$) du commutateur cadencé (S1), et pour ajouter la valeur d'allongement réglée ($T_{on\_add}$) à la valeur de régulation ($T_{on\_Regler}$).

10. Dispositif de commande pour moyens d'éclairage selon la revendication 9, dans lequel le circuit de correction de facteur de puissance (3) est configuré sous forme d'un régulateur à découpage avec le commutateur cadencé (S1).

11. Dispositif de commande selon l'une des revendications 9 ou 10,

**caractérisé en ce que**
la fréquence de la modulation du circuit de correction de facteur de puissance (3) est choisie de telle sorte que, dans la tension de sortie du circuit de correction de facteur de puissance (3), une ondulation correspondante est obtenue.

12. Circuit de commande selon la revendication 11,
**caractérisé en ce que**
la tension de sortie affectée par l'ondulation est fournie à un circuit de régulation de moyens d'éclairage, qui varie la fréquence de fonctionnement des moyens d'éclairage pour maintenir constante la puissance des moyens d'éclairage.

13. Dispositif de commande selon l'une des revendications 9 à 12,
**caractérisé en ce que**
la fréquence de la modulation du circuit de correction de facteur de puissance est choisie dans un domaine entre 50 Hz et 500 Hz, de préférence de 90 Hz jusqu'à 130 Hz.

14. Dispositif de commande selon l'une des revendications 9 à 13,
**caractérisé en ce que**
le circuit de correction de facteur de puissance est conçu pour le fonctionnement en mode limite borderline.

Fig. 1

Fig. 2

EP 1 803 336 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10128588 A1
- US 2004047166 A1
- US 5623187 A
- US 6304465 B1

- WO 9934647 A1
- EP 490329 B1
- EP 490329 A1